Europäisches Patentamt

European Patent Office

Office européen des brevets

(19)

(11) Publication number: **0 021 834**
**A1**

(12) **EUROPEAN PATENT APPLICATION**

(21) Application number: **80302141.9**

(22) Date of filing: **26.06.80**

(51) Int. Cl.³: **E 04 B 1/347**
**A 01 G 9/14**

(30) Priority: **26.06.79 DE 2925637**

(43) Date of publication of application:
**07.01.81 Bulletin 81/1**

(84) Designated Contracting States:
**AT BE FR GB IT NL**

(71) Applicant: **The British Petroleum Company Limited**
**Britannic House Moor Lane**
**London EC2Y 9BU(GB)**

(72) Inventor: **Pfohl, Werner**
**Deutsche B.P. Aktiengesellschaft Postfach 60 03 40**
**D-2000 Hamburg 60(DE)**

(74) Representative: **Ryan, Edward Terrence et al,**
**BP TRADING LIMITED Patents and Licensing Division**
**Chertsey Road**
**Sunbury-on-Thames Middlesex, TW16 7LN(GB)**

(54) Heat insulating wall and/or roofing element.

(57) A building is provided with an improved heat insulating wall or roofing element in which opposed sides of a tubular plastic sheet (2) are held in gripping means (1) provided with a slot through which the sheet (2) passes to surround a rigid core (3) held within the gripping means (1). At least one gripping means (1) is releasably attached to the building in a position which holds the film (2) taut so as to produce a gas gap between opposed faces (2a, 2b) of the tubular sheet.

FIG.1

EP 0 021 834 A1

1

## Heat Insulating wall and/or roofing element

The present invention relates to a building provided with a heat-insulating wall and/or roofing element comprising a tubular plastics film.

Heat-insulating wall and/or roofing elements comprising tubular plastics film are disclosed in German Offenlegungsschrift (land-open specification) DE-OS 2 059 832. This disclosed a tubular plastics film which is held at, at least two opposite edges by elongated plastics extrusions having a generally C-shaped cross-section (C-profiles). A flexible cord is inserted into each side of the tubular film and the cord and the film surrounding it is inserted into the internal opening of the C-profile. The gap between the top and the bottom arms of the C is less than the diameter of the cord so that, when the cord has been passed along the C-profile, the cord and the film surrounding it are retained by the C-profile.

The previously known element, however, has the draw back that the intermediate space between the two walls of the plastic sheet has to be placed under excess pressure, so that the sheet tube is "inflated". In this way in the first place the sheet is stretched so that if there is a wind the sheet is prevented from flapping. Furthermore, in this manner the two opposite walls of the tube are kept at a distance from each other so that a heat-insulating effect can be achieved. In order to keep the plastic tube under excess pressure, however, special devices are required, such as air compressors and the like, the procurement and operation of which costs money. If the compressor breaks down due to a defect or power breakdown, the thermal insulation effect is lost, and there is the risk that the sheet, which is now slack, can be damaged or torn by wind. A further drawback consists in the fact that the previously known element loses its thermal insulation effect when it leaks. The excess pressure can escape even from a comparatively small hole. By "inflating" the tube, a convection flow can develop relatively free from hindrance between the two walls in the intermediate space, which is fairly large as a result of the inflation, and in this way the conveyance of heat from one wall to the other is improved. In this manner, of course, the thermal insulation deteriorates. Finally, in the case of the previously known element the core profile consists of a round cord. This is fairly difficult to insert into the C-profile furthermore, it is difficult to roll up the plastic tube and the round cord with each other when the plastic sheet is to be removed if better ventilation is desired.

The present invention provides an improved thermally insulating wall and/or roofing element and improved buildings incorporated the element which does not rely on inflation under gas pressure to maintain the insulating space between opposed faces of the plastics film.

According to the present invention is a building provided with a heat-insulating wall and/or roofing element which comprises a tube of flexible plastics sheet which is extended to form a double walled sheet by core members lying within the tube, which core members are held within opposed core gripping profiles, each provided with a slot through which the double walled sheet passes to surround the core member characterised in that the core members are rigid and that means are provided for releasably holding at least one core gripping profile on the building in a position in which the double walled sheet is under tension.

The term 'buildings' used throughout this specification includes both permanent and temporary structures and includes sheds, greenhouses, and hot beds, and swimming pools.

The buildings to which the present invention is applied may be originally constructed with the heat insulating elements. Alternatively the head insulating element may be added to an existing building for example an existing glass green-house.

The tube of flexible plastics sheet is preferably formed from plastics film i.e. material less than 0.25 mm thick. An example of a suitable plastics material for the sheet is low density polyethylene.

The tubular plastics film may be produced as such by the well-known film blowing process. Alternatively it may be produced by joining two plastics sheets at their edges, for example by heat-welding.

In most cases the plastics sheet is preferably translucent

For certain applications, however, it may also be desirable for the sheet to consist of a material which absorbs or reflects light and heat radiation of certain wavelengths. Thus, for example, in a green-house it is desired in certain cases to keep certain radiation wavelength ranges away from plants. On the other hand, the radiation of light and warmth from the interior of the building can also be controlled in this manner.

The cores are held within core gripping profiles, i.e. elongated members extending along a substantial proportion of the length of the tube of plastics sheets. Such profiles are usually made by extrusion, and suitable materials for such extrusions will be well-known to those skilled in the art.

The core gripping profiles are preferably hollow extrusions having an opening extending along one side.

The profile may have a generally C-shaped cross section (a C-profile).

The cores may lie wholly within the core gripping profile and may for example by cylindrical solid rods or hollow tubes of diameter such as to fit within the core gripping profile but greater than the minimum width of the slot through which the plastics film passes. In such a case the maximum air gap between the opposed faces of the tubular flexible plastic sheet is determined by the width of the slot in the profile.

The width of the slot in the core gripping profile may for example be 10 to 50 mm, preferably 20 to 40 mm.

Alternatively only a portion of the core may lie within the core gripping profile, the remainder of the core extending through the slot into the space between the opposed faces of the tubular plastics sheet. The portion of the core within the core gripping profile is of such a size that it cannot pass through the slot and is thus retained in the core gripping profile. The portion of the core lying outside the core gripping profile may be of such a size that the gap between the opposed faces of the tubular flexible plastics sheet is greater than the width of the slot, giving an increased insulating air gap.

The core member may consist of a single part e.g. a single rod or tube. In a preferred embodiment of the invention however each core member comprises two core parts and an additional plastics sheet extends between the core members and is held at each side between the two core parts.

By providing an additional plastics sheet the thermal insulation is improved. Furthermore, the reliability of the insulating element is improved. If for example one of the plastics layers is damaged or destroyed, a gas space enclosed by two plastic layers still remains.

When the plastics sheets are under tension the two core parts are pressed against each other. The inner plastics sheet is held between the surfaces of the core parts which are in contact (the contact surfaces) so determining the distance between the inner sheet and the opposed surfaces of the double walled sheet whose relative position is determined by the external form of the core member.

The core parts may be provided with mutually engaging projections and grooves on the contact surfaces. These grooves and projections relieve the demands on the sheet jointly where the additional plastic sheet and the double walled plastic sheet are joined together e.g. by heat welding. Furthermore relative movement of the core parts in the plane of the sheet is prevented.

In many cases, however, it is simpler, if the mutual contact surfaces of the two core parts are smooth. This can be particularly desirable if the core parts because of their size or special form can only move a little within the core gripping profile.

It may be preferable for the two core parts to be identical, so that only one core part needs to be produced and stored. However where different distances between the sheets are required or different gases/liquids are intended to be introduced between the sheets through the core members (as explained in more detail below), the core parts may be different.

The core parts can e.g. have a semi circular cross-section, so that the core member as a whole corresponds to the rod or tube already mentioned. In other to prevent the core parts slipping out of the slot in the core gripping means on twisting, each core part should be wider than the slot.

As explained above the distance between the two outermost plastics layers (i.e. the opposed faces of the double walled sheet formed from the tubular film) is usually determined by the size of the slot in the core gripping profile. However when an additional plastic sheet is present it may be desirable to have an increased distance between the outermost plastic layers. This may be achieved by using core parts which project through the slot and extend away from each other on either side of the slot along the length of the core member so press the opposed faces of the double walled sheet away from each other.

It is conceivable that the additional, inner, sheet is fastened to the core parts and a tubular sheet is drawn over both core parts. Any difference in the width of the sheets is taken up on tensioning the sheets by the elasticity of the sheets.

The inner sheet will be more reliably held and the heat insulting element will be put together more easily however if the additional inner sheet is joined at opposed sides to the tubular sheet which forms the outermost layers of the heat-insulting element. In this case the sheets can be drawn simultaneously over the core members lying within the core gripping profiles or the core members can be inserted in the edges of the sheets lying in the core gripping profiles.

A particularly simple and secure connection of the sheets to one another can be obtained if the inner sheet is heat-sealed to the tubular sheet.

The width of the inner sheet can be somewhat less than the width of the opposed faces of the tubular sheet.

When the inner sheet is stretched to place it under tension the tubular film must extend around the core member, thus the width of the double walled sheet when under tension must be somewhat larger.

As flexible plastic sheets have sufficient elasticity the width of the inner sheet and the double walled sheet can be the same. In this case a three layer sheet can be particularly simply produced by superimposing three plastic sheets and heat-welding or otherwise joining the superimposed edges together. The sheets joined together may have different strengths. Sheets of differing form e.g. having projections may be used. The building of the present invention is provided with means for releasably holding the core gripping profile on the building in a position in which the double walled sheet is under tension.

By attacking the core gripping profiles to the building sufficiently far apart so as to place the double walled sheet under tension the double walled sheet is pulled taut so as to maintain a substantially constant air gap. This air gap remains substantially constant even if the sheet is damaged because the air gap is not dependent on maintaining an excess pressure. By suitable choice of the size of the slot (or the size of the core member if this extends through the slot into the space inside the double walled sheet) the distance between the two walls of the double walled sheet can be maintained at a relatively small value such that convection currents do not form as in the case of the previously disclosed inflated element. Such convection currents impair the heat insulation properties.

By making at least one of the core gripping profiles releasably attached to the building the tension on the plastic sheet can be removed by releasing the profile. When the plastic sheet is no longer under tension it is relatively easy to insert the core member and the plastic sheet into the profile or to remove it. Alternatively the core member can be inserted into the core gripping profile and the plastic sheet passed over it. The use of rigid core members greatly facilitates insertion and removal of the core members.

The means for releasably holding the core gripping profile on the building may comprise one or more hooked portions on the core gripping means which are engageable with corresponding hooked portions on the building.

It is preferred to provide the building with means for moving at least one core gripping profile relative to the rest of the building from a position in which the double walled sheet is not under tension to a position in which it is under tension. Thus the means for moving a core gripping profile relative to the building may comprise one or more screw threaded members on the core gripping profile which engage with corresponding screw threaded members fixed to the building.

Alternatively, where the heat insulating element forms part of a sloping roof, the means for moving the core gripping profile to a position in which the double walled film is under tension comprises an elongated member attached to the uppermost core gripping profile, which elongated member can be raised vertically and fixed in position so as to place the double walled film under tension.

The simplest structure is achieved by filling the intermediate space between the walls with ordinary atmospheric air, without any devices being required to place the intermediate space under excess pressure. However, feed and discharge pipes may also be provided for the passing of gases or liquids through the space between the sheet walls. Thus, for example, liquids, solutions or gases can be brought into the space between the sheet walls to absorb light or heat. To increase the absorption, suitable absorbents, e.g. copper salts, could be added to the water. In a green-house, for example, when there is a high outdoor temperature, water could be passed through the imtermediate space between the sheet walls which gets heated up and thus prevents too great a heading of the interior of the green-house. The heat of the water could then be stored by passing the water through a suitable circuit, and if required serve to heat the green-house or to warm the water used for watering the plants. Instead of a liquid, one could also use a heat-sbsorbent gas, such as for example $CO_2$.

A further possibility of passing liquids through would consist in allowing salt water to flow over the lower sheet wall which is heated by the rays of the sun, so that salt-free water of condensation would settle on the upper wall which can then be conducted away. In this way de-salinated water could be produced in a simple manner.

In the case of the known element these types of conduction of liquids are not possible, as the element has a bellied out or pillow-

8

like form, so that liquid could easily collect in the lower-lying parts of the sheet. As a result this effect would become promounced in particular because the sheet is caused to belly out still more by the weight of the liquid contained in it. Furthermore, the feed-in and the discharge of liquids would cause almost insurmountable diff difficulties.

But the delivery and discharge pipes can also simply serve to pass ordinary air through the intermediate space between the walls of the plastic tube, in order in this way to remove any film or moisture or undesired water of transpiration, and thus improve the passage of light and heat radiation.

Particularly simple delivery and discharge pipes are obtained according to the invention by providing passages in the core members e.g. by having the core members in the form of tubes, provided with perforations and designed as delivery and discharge pipes. The gases or liquids in this case are introduced into the tubular core sections, distributed by these over the sheet walls and removed again from other tubular core sections.

The open edge zones can be closed by welding, sticking or similar measures.

In order to improve the behaviour during the passage of light and heat readiation or in order better to distribute liquids which run over the sheet walls or are applied to same, the sheet can be provided with embossings, ribbings or the like.

Examples of the invention will be described below on the basis of advantageous modes of embodiment with reference to the enclosed drawings.

Figure 1 is a cross-section through a double core gripping profile showing one end of a double walled plastic sheet surrounding a core member located within the profile.

Figure 2 is a cross-section of a single core gripping profile for use in the present invention.

Figure 3 is a cross-section of another form of core gripping profile showing a tubular core in place.

Figure 4 shows the basic construction of a shed or green-house by means of the wall and/or roofing elements according to the invention with one embodiment of a device for placing the plastic sheet under tension.

Figure 5 shows a further mode of embodiment of a device for releasably holding the plastic sheet under tension.

Figure 6 shows a modification of the embodiment shown in Figure 5.

Figure 7 and 8 show further forms of embodiment according to the invention of the device for moving the core gripping profile so as to tension the plastic sheet.

Figure 9 shows an embodiment according to the invention for desalinating seawater.

Figure 10 shows a cross section through the edge of the wall and/ or roofing element according to the invention which has an additional plastics sheet.

Figure 11 shows a cross section through the edge of another form of wall and/or roofing element according to the invention having an additional plastics sheet.

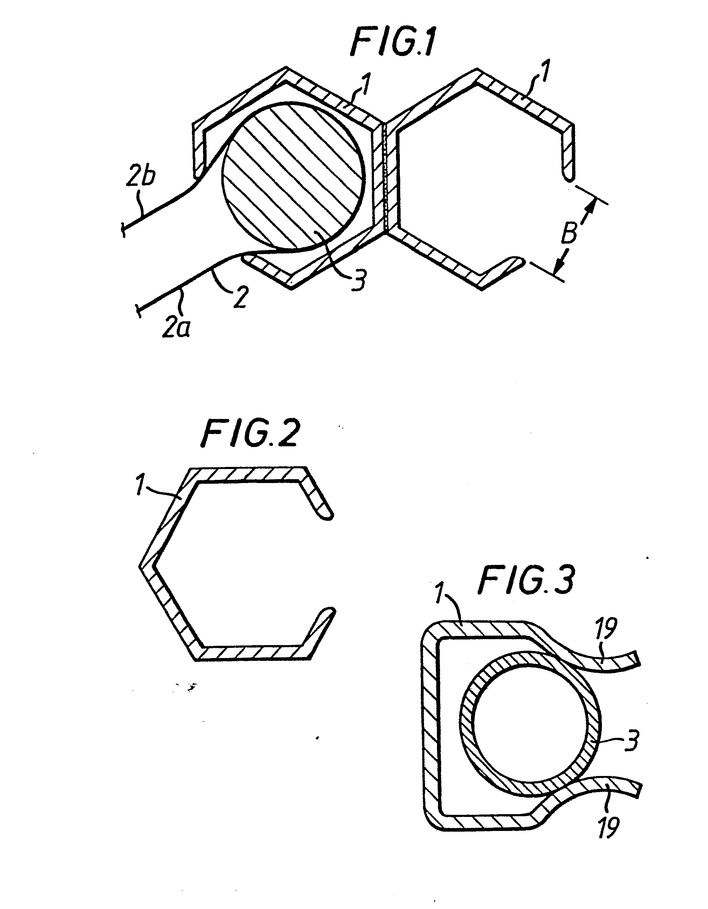

In Figure 1 a section is shown which can be used for the roofing element according to the invention. This section consists of two hexagonal C-sections 1, which are arranged next to each other, in order to take two tubular flexible plastics films 2. Such a flexible plastics film 2 is fixed in the left-hand C-section 1 by a core section 3, which is tubular or rod-shaped. The diameter of the core section 3 is larger than the width of aperture B of the C-section 1. The opposite edge of the plastic tube 2, not shown in Figure 1, is held in a corresponding manner. When both the C-sections 1 holding the plastic tube 2 are moved away from each other, the plastic tube 2 is brought under tension, so that its upper and lower walls 2a and 2b have a distance between them which basically corresponds to the width of aperture B of the C-section.

Naturally it is not necessary, as shown in Figure 1, for two C-sections 1 for two different film tubes to be joined to each other. Instead of this, individual C-sections 1 can be used on one side or both sides of the plastics tube 2, which are shown for example in Figures 2 and 3. The C-section 1 of Figure 2 has a hexagonal cross-section like the C-sections of Figure 1. The C-section 1 of Figure 3, on the other hand, is basically rectangular in cross-section and is provided at the opening edge with bent shanks 19, which touch the film in the taut condition and are curved in such a way that no breaks occur in the C-section even when the foil is stretched. The core section 3 of the C-section 1 of Figure 3, unlike that of Figure 1, is tubular.

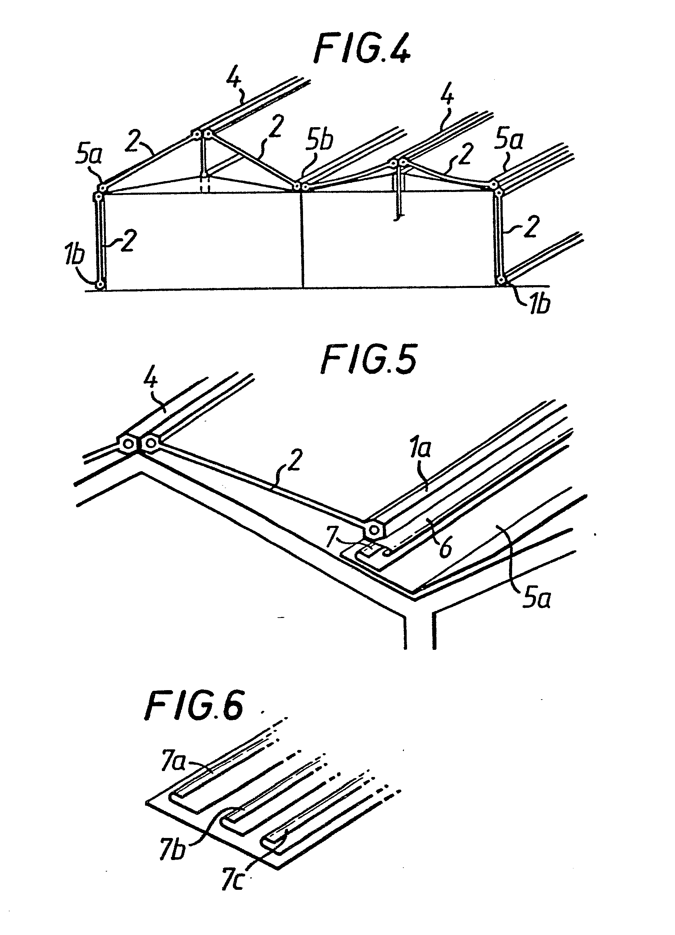

Figure 4 shows in diagrammatical form a shed, which has wall and/ or roofing elements according to the invention. In the case of the two roofing elements shown in the right-hand side in Figure 2 the ridge 4 with the two C-sections arranged on it, which have the form as shown in Figure 1, is lowered to such an extent that the films 2 can be fixed by means of the core sections 3 into the C-sections on the righe 4 and also to the outer eaves 5a or the middle eaves 5b. The film is then stretched by moving the ridge 4, as shown on the left-hand side in Fibure 4, correspondingly further upwards. Naturally, in like manner the middle eaves 5b could also first be lifted in order to stretch the two middle film tubes 2, and after the introduction of the film tube edges into the C-sections they could be lowered. The two lateral roof film tubes 2 would then have to be stretched by suitably displacing the eaves 5a.

An alternative form of embodiment for stretching the plastic tube 2 is shown in Figure 5. With this mode of embodiment the ridge 4 with the C-sections arranged in it is firmly fixed, whilst the C-section 1a arranged on the eaves 5a is provided with an extension 6 with a hook-shaped cross-section, which engages with a corresponding hook-shaped strip 7 fixed to the eaves 5a. After the plastic tube 2 has been introduced, with this mode of embodiment the film must be stretched by pulling on the section and then hooking the hook-shaped extension 6 into the hook-shaped strip 7. Instead of a hook-shaped strip 7, several parallel hooked strips 7z, 7b, 7c, can be provided as shown in Figure 6.

With these modes of embodiment, however, under certain circumstances it may be necessary to use a comparatively great amount of force in order to stretch the film for the hooking operation. For this reason one can arrange for the mobile C-section 1a to be moved away by means of screws from the opposite C-section in order in this way to stretch the film 2.

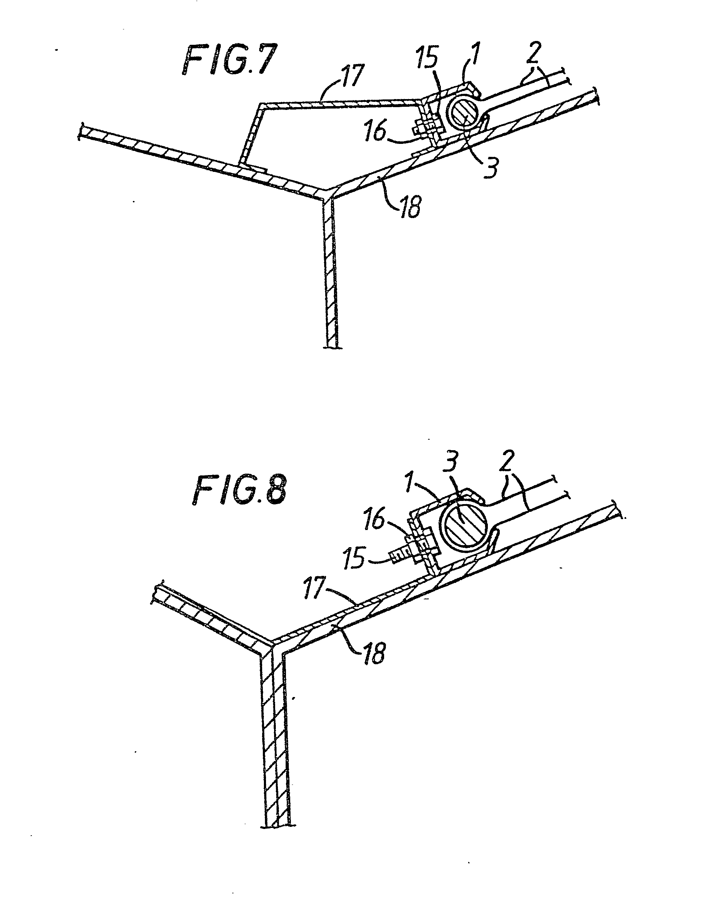

Examples of such fixtures are shown in Figures 7 and 8. The tubular film 2 here is held with a core section 3 in a C-section 1 which is fixed by means of screws or bolts 15 and nuts 16 to the guttering 17 and clamped against this. The guttering is fixed by fixing means such as screws or the like, not shown, to the roof structure indicated at 18. Thus, by means of the screws or bolts 15 the eaves C-section 1 is drawn against the correspondingly shaped guttering, whilst the double C-section (mode of embodiment of Figure 1) is fixed on the ridge. The modes of embodiment of the guttering and the stationary C-section on the ridge make possible a simple insulation in these metal bridges by applying an insulating material on the interior of the shed.

These or other tensioning devices would also have to be provided in the case of the wall elements of Figure 4, in which plastic tubes 2 are inserted between a C-section in the eaves 5a and a further C-section 1b, which is arranged in the vicinity of the floor.

With all these modes of embodiment comparatively large-area wall and/or roofing elements can be produced. Thus lengths of 25 m and widths of 3 or 4 m can be obtained without any problem. The width of aperture B of the C-sections and hence the distance between the walls 2a, 2b of the film tube 2 in the stretched condition may amount to about 2.5 cm, whilst the diameter of the rod-shaped or tubular core section 3 may amount to about 3.5 cm. Naturally, however, other dimensions are also possible.

In the illustrations, in each case only two out of four edges of the film tube are closed and fixed by C-sections. Naturally it is also possible to fit a core section on the other two edges and to combine them with the other two core sections. This lateral core section, however, must then possess a variable length which can be achieved by having the core section consist of rods which can be slid in and out of each other telescope-fashion or having it capable of being bent in parallel to the tube film away from the edge. The film is then welded outside this lateral core section. Then the C-sections shown in the illustrations are moved further away from each other, the core section running vertically to these C-sections increasing its length. These core sections can then be fitted into other C-sections, so that the film tube which is now sealed on all sides is retained on all four sides by C-sections.

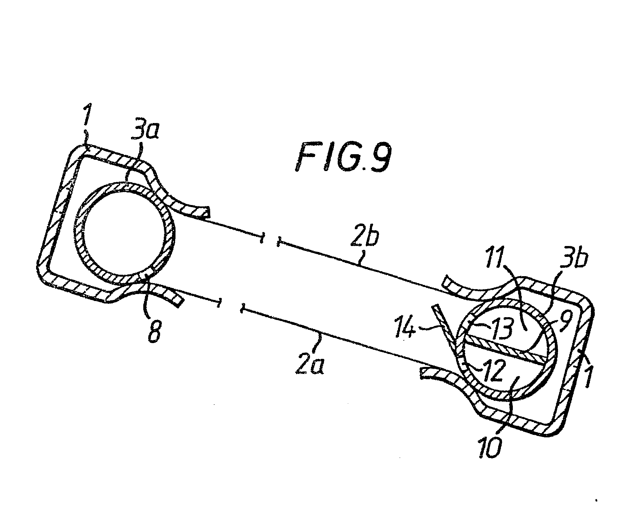

In Figure 9 yet another form of embodiment of an element according to the invention is shown, with which it is possible to desalinate seawater. In this mode of embodiment the core sections 3a and 3b are designed as tubes which are arranged in C-sections 1 which have the form shown in Figure 3. The upper core section 3a is provided with holes 8, through which the seawater introduced into the tubular core section 3a runs away via the inclined lower film tube wall 2a. The internal space of the lower core section 3b is sub-divided by a partition wall 9 into a lower internal space 10 and an upper internal space 11, which are connected by apertures 12 or 13 with the imtermediate space between the film walls 2a and 2b. The seawater running away via the lower film wall 2a penetrates through the lower apertures 12 into the internal space 10 of the core section 3b and runs away via this internal space. The water condensing on the upper film wall 2b runs into a reception gutter 14 arranged outside on the lower core section 3b approximately at the height of the intermediate wall 9 and then passes through the holes 13 into the internal space 11 of the core section 3b, whence it is conducted away. By means of ribbing or embossing of the film walls, not shown in the Drawing, one can also arrange for the salt water to run away more or less uniformly via the film walls, or a greater layer height of the absorption liquid is made possible in order in this way to increase the degree of efficiency.

With this form of embodiment of the invention it is also possible to produce temporary coatings on the surface of the lower film 2a, by passing a liquid coating compound containing solvent over the upper perforated core section 3a, and withdrawing solvent in evaporated form through the upper internal space 11 of the lower core section 3b until an adhering film has been created on the surface. If the adhesive film is to be removed again, solvent should be added via the upper core section 3a, which again removes the film from the surface.

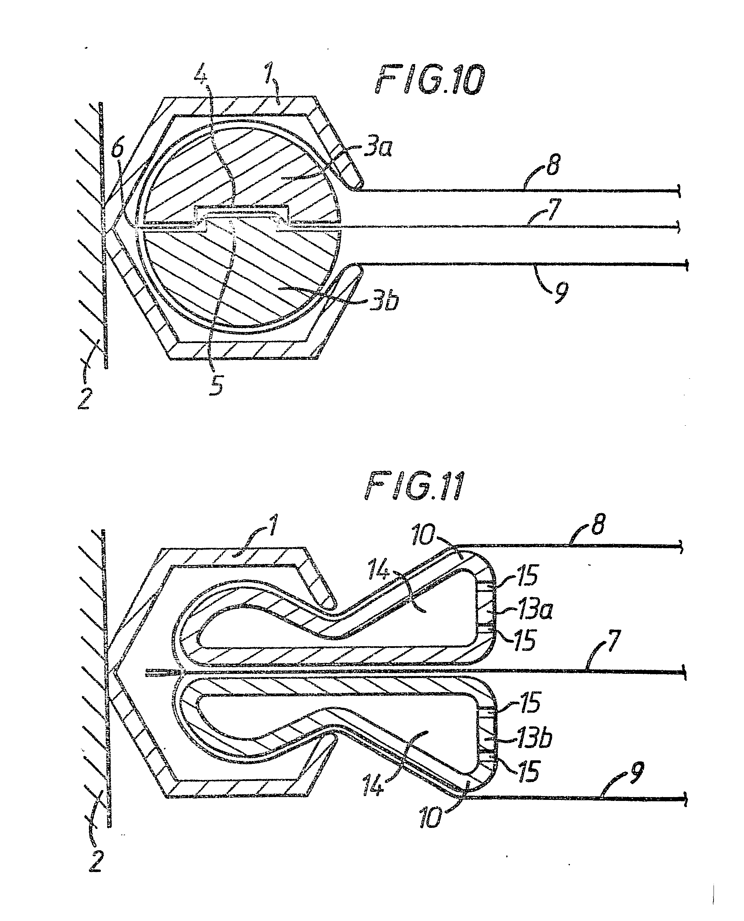

In the embodiment shown in Figure 10 a core gripping means consisting of a C-profile 1 is fastened to a wall, a support or other building element. The core is located within the C-profile and consists of two parts 3a, 3b, which each have a substantially semicircular cross-section.

The upper core part 3a has a groove 4 which engages with a corresponding projection in the lower core part 3b. This not only hinders any relative displacement of the two core parts but more importantly holds the middle film more securely. The sheet arrangement consists of three sheets which are heat-sealed rogether at 6. The middle sheet 7 is between the two core parts 3a and 3b. The upper sheet 8 is laid around the lower core part 3b. When the sheets are tensioned the distance between the sheets 8 and 9 (which together form a double walled tubular sheet) is determined by the width of the opening or slot in the C-profile 1. Simultaneously the tension on these sheets 8 and 9 presses the core parts 3a and 3b together so that the middle sheet 7 is held fast between these core parts.

In the embodiment of Figure 11 the two core parts 13a and 13b have flat contact surfaces, including the contact surfaces between the portions 10 projecting through the slot in the C-profile. These portions 10 extend outwardly from the slot. Because the outer sheets 8 and 9 pass over the portions 10, the distance apart of the sheets is increased.

The core parts 13a and 13b have cavities 14 and holes 15 through which liquids and/or gases can be introduced into, or withdrawn from, the spaces between the sheets.

Claims:

1.  A building provided with a heat-insulating wall and/or roofing
    element which comprises a tube of flexible plastics sheet which is
    extended to form a double walled sheet by core members lying within
    the tube which core members are held within opposed core-gripping
    profiles, each provided with a slot through which the double walled
    sheet passes to surround the core member characterised in that the
    core members are rigid and that means are provided for releasably
    holding at lease one core gripping profile on the building in a
    position in which the double walled sheet is under tension.

2.  A building according to Claim 1 in which the plastic sheet is
    translucent.

3.  A building according to Claim 1 in which the plastic sheet consists of a
    material which sbsorbs or reflects light and head radiation of at least
    certain wavelengths.

4.  A building according to any one of the preceding claims wherein a
    portion of the core member extends through the slot into the space
    between the opposed faces of the double walled plastics sheet and is of
    such a size that the distance between the opposed faces is greater than
    the width of the slot.

5.  A building according to any one of the preceding claims wherein each
    core member comprises two core parts and an additional plastics sheet
    extends between the core members and is held at each side between the
    two core parts.

6.  A building according to Claim 5 wherein the core parts are so dimensioned
    that each part within the core gripping profile has a cross-section
    greater than the width of the slot in the core gripping profile.

7. A building according to either one of Claims 5 and 6 wherein the core parts are provided at their contact surfaces with mutually engaging grooves and projections.

8. A building according to either one of Claims 5 and 6 wherein the contact surfaces are smooth.

9. A building according to either one of Claims 5 or 6 wherein the core parts are arranged mirror symmetrically to each other.

10. A building according to Claim 4 and any one of Claims 5 to 9 wherein core parts have a portion extending through the slot in the core gripping profile and widening outwards such that the distance between the outermost plastics sheet surfaces is greater than the width of the slot.

11. A building according to any one the Claims 5 to 9 in which the additional flexible plastics sheet is connected at opposed sides to the tubular sheet.

12. A building according to Claim 11 wherein the additional film is heat sealed to the tubular sheet.

13. A building according to any one of the preceding claims wherein means are provided for moving at least one core gripping profile relative to the rest of the building from a position in which the double walled sheet is not under tension to a position in which it is under tension.

14. A building according to any one of the preceding claims wherein feed and discharge pipes are provided for passing gases or liquids through the space between the plastics walls.

15. A building according to any one of the preceding claims wherein the core members contain passages and are provided with perforation so as to act as feed and discharge pipes.

16. A building according to any one of the preceding claims wherein the space between the plastics walls is sealed by joining non-closed edges by heat sealing or the like.

17. A building according to any one of the preceding claims wherein the plastics sheet is provided with embossings, rubbings or the like.

## FIG.1

*1*

*2b*

*B*

*2*

*2a*

*3*

## FIG.2

*1*

## FIG.3

*1*

*19*

*3*

*19*

# FIG.4

# FIG.5

# FIG.6

*FIG.7*

17    15  1   2

16

3

18

*FIG.8*

3   2

1

16

15

17

18

FIG.9

0021834

## FIG.10

## FIG.11

0021834

European Patent
Office

**EUROPEAN SEARCH REPORT**

Application number

EP 80 30 2141

| Category | Citation of document with indication, where appropriate, of relevant passages | Relevant to claim |
|---|---|---|
| | <u>DE - A - 1 500 710</u> (ENDER)<br>* Page 5, lines 13-22; page 6, lines 1-24; page 7, lines 1-12; page 10, lines 21-24; page 11, lines 1-23; page 12, lines 1-17; figures 1-4, 20-27* | 1 |
| | <u>FR - A - 2 354 046</u> (RICHEL)<br>* Page 1, lines 27-30; page 2, lines 1-29; figures 1-3 * | 1 |
| | <u>US - A - 4 103 401</u> (CONLEY)<br>* Column 1, lines 27-36; column 2, lines 59-68; column 3, lines 1-10, 33-68; column 4, lines 1-63; figures 1-6 * | 1-3 |
| | <u>FR - A - 1 467 214</u> (LOUZANNE)<br>* Page 1, column 2, lines 15-41; page 2, column 1, lines 1-25; page 3, column 2, lines 21-40; figures 12,13 * | 1 |
| | <u>US - A - 3 982 361</u> (DEUTSCH)<br>* Column 2, lines 45-68; column 3, lines 1-42; column 4, lines 3-15; figures 1,2,6 * | 1 |
| | <u>FR - A - 2 141 257</u> (CRESSWELL)<br>* Page 2, lines 25-40; page 3, lines 1-31; page 6, lines 9-17; figures 1-5,8 *<br><br>-- ./. | 4,5,7 |

**DOCUMENTS CONSIDERED TO BE RELEVANT**

**CLASSIFICATION OF THE APPLICATION (Int. Cl. 3)**

E 04 B 1/347
A 01 G 9/14

**TECHNICAL FIELDS SEARCHED (Int.Cl. 3)**

E 04 B
A 01 G

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 03-10-1980 | SCHOLS |

EPO Form 1503.1   06.78

European Patent Office

**EUROPEAN SEARCH REPORT**

Application number

EP 80 30 2141

| | **DOCUMENTS CONSIDERED TO BE RELEVANT** | | | CLASSIFICATION OF THE APPLICATION (Int. Cl. 3) |
|---|---|---|---|---|
| Category | Citation of document with indication, where appropriate, of relevant passages | | Relevant to claim | |
| AD | <u>DE - A - 2 059 832</u> (LEMFOERDER)<br>* Page 5, lines 21-29; page 6, lines 1-33; page 7, lines 1-25; figures 1-3 * | | | |
| | | | | **TECHNICAL FIELDS SEARCHED (Int. Cl. 3)** |

EPO Form 1503.2  06.78